Europäisches Patentamt

(19) European Patent Office

Office européen des brevets

(11) Publication number: **0 093 799**
**B1**

(12) **EUROPEAN PATENT SPECIFICATION**

(45) Date of publication of patent specification: 30.03.88

(21) Application number: 82111111.9

(22) Date of filing: 02.12.82

(51) Int. Cl.⁴: **G 11 B 5/187,** G 11 B 15/62, G 11 B 17/32 // G11B5/48

(54) **Magnetic transducer head.**

(30) Priority: **12.05.82 US 377284**

(43) Date of publication of application:
**16.11.83 Bulletin 83/46**

(45) Publication of the grant of the patent:
**30.03.88 Bulletin 88/13**

(84) Designated Contracting States:
**DE FR GB**

(56) References cited:
DE-A-2 944 429
DE-A-3 032 482
FR-A-2 264 355
US-A-3 435 442
US-A-4 266 255

IBM TECHNICAL DISCLOSURE BULLETIN, vol. 17, no. 12, May 1975, page 3518, Armonk, N.Y., USA; D.K. PRIMAVERA et al.: "Flying height control in a rotating head magnetic tape recorder"

(73) Proprietor: **International Business Machines Corporation**
**Old Orchard Road**
**Armonk, N.Y. 10504 (US)**

(72) Inventor: **Froehlich, Frederick Burton**
**12520 East Kit Carson Place**
**Tucson Arizona 85715 (US)**
Inventor: **Hu, Paul Yu-Fei**
**8400 Fernhill Drive**
**Tucson Arizona 85715 (US)**

(74) Representative: **Petersen, Richard Courtenay**
**IBM Svenska AB Patent Operations Box 962**
**S-181 09 Lidingö (SE)**

(56) References cited:
**IBM TECHNICAL DISCLOSURE BULLETIN, vol. 18, no. 9, February 1976, pages 2812-2813, Armonk, N.Y., USA; F.E. HAUKE et al.: "Tape lifter for rotating head tape recorder"**

**IBM TECHNICAL DISCLOSURE BULLETIN, vol. 10, no. 8, January 1968, pages 1231-1232, Armonk, N.Y., USA; R.C. BRADFORD et al.:**

EP 0 093 799 B1

**0 093 799**

(56) References cited:
"Vacuum controlled transducer"
IBM TECHNICAL DISCLOSURE BULLETIN, vol.
12, no. 5, October 1969, pages 674-675,
Armonk, N.Y., USA; J.I. AWEIDA et al.:
"Antistick transducer"

IBM TECHNICAL DISCLOSURE BULLETIN, vol.
20, no. 8, January 1978, pages 3185-3186,
Armonk, N.Y., USA; W. HEHL et al.: "Spherical
multigroove magnetic head design"

IBM TECHNICAL DISCLOSURE BULLETIN, vol.
24, no. 6, November 1981, page 2825, Armonk,
N.Y., USA; P.Y. HU et al.: "Magnetic head
contour with beveled relief"

## Description

This invention relates to magnetic transducer heads for sensing magnetic transitions from a moving magnetic medium. Such a head comprises a plurality of transducers on an operative face of the head, and a plurality of slots formed in the operative face, parallel to the direction of motion of the medium and adjacent to the leading and trailing faces of the operative face.

In IBM Technical Disclosure Bulletin, Vol. 24, No. 6, November 1981 is described such a read-after-write magnetic head, the contour of which being beveled at the leading and trailing edges and immediately prior to the second element in a dual-element configuration.

DE—A—2,944,429 describes a rotary head and a drum which is provided with fluid outlets. Fluid under pressure is supplied between a tape and a scanning device at the start of the tape motion.

A problem has arisen with the highly polished surfaces now being provided on the operative faces of magnetic heads as well as on the flexible magnetic medium coating. Both the medium and the head include the highly polished contact surfaces in order to diminish undue wear and improve output electrical signals when the medium, such as the magnetic tape, is pulled over the magnetic head to read and write information to and from the magnetic tape. However, these highly polished surfaces cause a problem when the tape is stationary or near stationary, as is required in the start and stop operations standard in data processing systems. The two highly polished surfaces cause the tape to "wring-in" and thereby cling to the magnetic head face. Present day high-speed and high-throughput data processing systems require a rapid start of the tape when the start command is given after the tape is stopped at the position required for the next block of data information to be obtained from the tape. With the highly polished surfaces, the tape clings to the operative face of the head and prevents a rapid start until the tape is in motion and an air bearing is built up between the two highly polished surfaces.

It is, therefore, an object of the present invention to provide a means for overcoming the clinging of the tape to the head to permit a rapid start and stop operation of the data processing system.

The present invention further seeks to provide a controlled fluid tape lifter that operates with a stationary magnetic head and a stationary medium with a controlled lift and operation that permits a short recovery time to return to normal read/write operations after the stopping of the tape between operations.

The present invention is disclosed in the attached claim 1.

In an embodiment of the present invention, a magnetic head includes a fluid entry device placed approximate to the centre of the head. The fluid entry device is controlled by a valve which, when activated, allows a fluid pressure to be injected into the space between the operative face of the magnetic head and a magnetic tape when the motion of the tape is stopped or about to be stopped. The valve in the deactivated state prevents the entry of the fluid pressure into the lifter device and also opens the lifter device to atmospheric pressure. The pressure provided by the lifter device, between the magnetic head and the magnetic tape, is such that the tape is lifted from contact with the transducers of the head to form a tent over the transducers. The head includes slots in its operative face formed parallel to the tape path to control the fluid flow, such that the tape flies at a preset distance from the transducers. The slots in the head allow the fluid to leak away when the tape is moving past the head. With the lifter fluid pressure activated when the tape is stationary, the slots are gauged to permit some fluid to leak around the tent formed by the tape. The tent can be quickly dissipated upon a reactivation to return to a sensing operation by the action of the leakage of the fluid pressure through the slots, as well as through the opening of the lifter device to atmospheric pressure.

The magnetic head includes a plurality of transducers on its operative face for sensing the magnetic transitions as the magnetic tape passes adjacent to the transducers. A plurality of slots are formed in the operative face of the magnetic head. At least some of the slots are formed parallel to the motion of the magnetic media and are adjacent to the beginning and end of the tape contact with the operative face of the magnetic head. The magnetic head further includes a means for introducing a fluid under pressure between the magnetic media and the transducers. Means are provided for controlling the pressure of the fluid entry into the means for introducing the fluid. The fluid under pressure, when actuated with the tape stopped or near stop adjacent to the operative face of the magnetic head, forms the tape into a tent-like structure over the head transducers. The pressurized fluid is contained within the tent-like structure and is permitted to be controllably released into the slots. The means for controlling the fluid pressure preferably opens the means for introducing the fluid to atmospheric pressure when it halts the entry of the pressurized fluid between the head and the tape.

The fluid operated tape lifter operates with a stationary mounted head to lift the tape away from the head when the tape is also stationary in the non-recording mode, while using the slots in the head to control the distance between the tape and the head when the pressurized fluid is entered and to permit a dissipation of the fluid when the head transducing action continues.

The present invention will now be described with reference to the accompanying drawings, in which

FIGURE 1 is a top plan view of a tape and head interface with a section of the tape cutaway to show the transducers and the tape lifter;

FIGURE 2 is a cross-sectional view on the line II—II of Fig. 1;

FIGURE 3 is a side view of the magnetic head of Fig. 1 with the tape lifter in operation; and

FIGURE 4 is a view on the curved line IV—IV of Fig. 3 showing the approximate interface of the tape with the head with the lifter in operation.

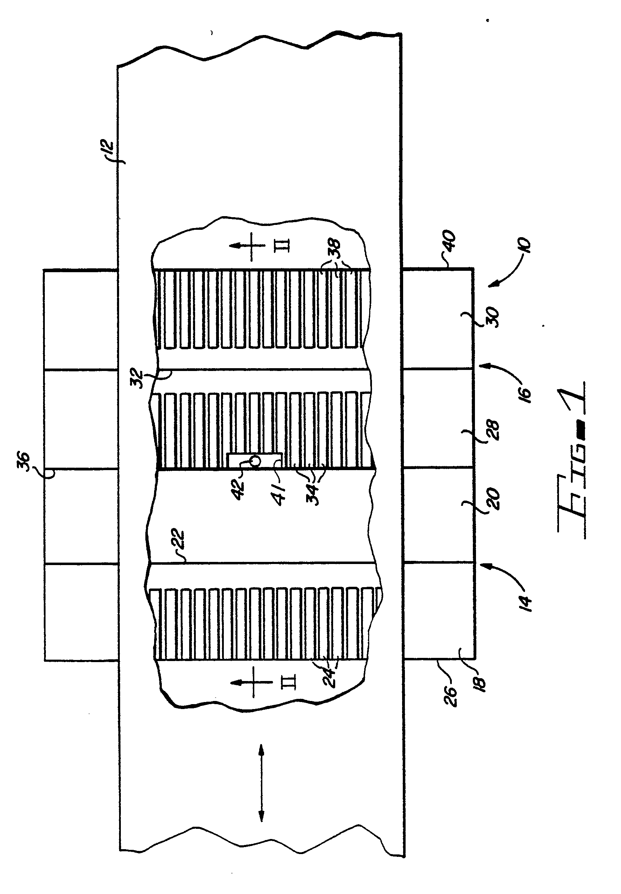

A magnetic head 10 (Fig. 1) interfaces a magnetic tape 12 in its operative position to read and write magnetic transitions from and onto the tape 12 for use in a data processing system. The head 10 includes a write module 14 and a read module 16.

The write module 14 includes a write chip 18 and a write closure 20. A plurality of transducers are formed at a write transducing gap line 22 formed between the write chip 18 and the write closure 20. The individual write transducers (not shown) can be readily formed by any of the techniques well known in the magnetic head art. The write chip 18 includes a plurality of forward write blind slots 24 formed in a leading face 26 of the magnetic head.

The read module 16 includes a read closure 28 and a read chip 30. The read closure 28 and the read chip 30 form a read transducing gap line 32 which includes a plurality of read transducers matching in number and formed in alignment with the write transducers of the write transducing gap line 22. The read transducers can be formed in any of the standard configurations and procedures as is well known in the art. The read closure 28 includes a plurality of forward read blind slots 34 formed in its leading face at a bond line 36 formed between the write module 14 and the read module 16. The read chip 30 includes a plurality of rearward read slots 38 formed at the trailing edge 40 of the read chip 30 which is also the trailing edge of the magnetic head 10. A rectangular recess 41 is formed in the leading edge of the read closure 28 of the read module 16 at the approximate centre of the magnetic head, and a lifter tube 42 extends through the read closure 28 to provide a fluid flow connection to between the head 10 and the tape 12. The tube 42 is connected to a connector tube 50 which is divided and leads to a normally open (NO) valve 48 and a normally closed (NC) valve 46. A fluid pressure pump 54 is connected to the other side of the valve 46 and the other side of the valve 48 is connected to atmosphere.

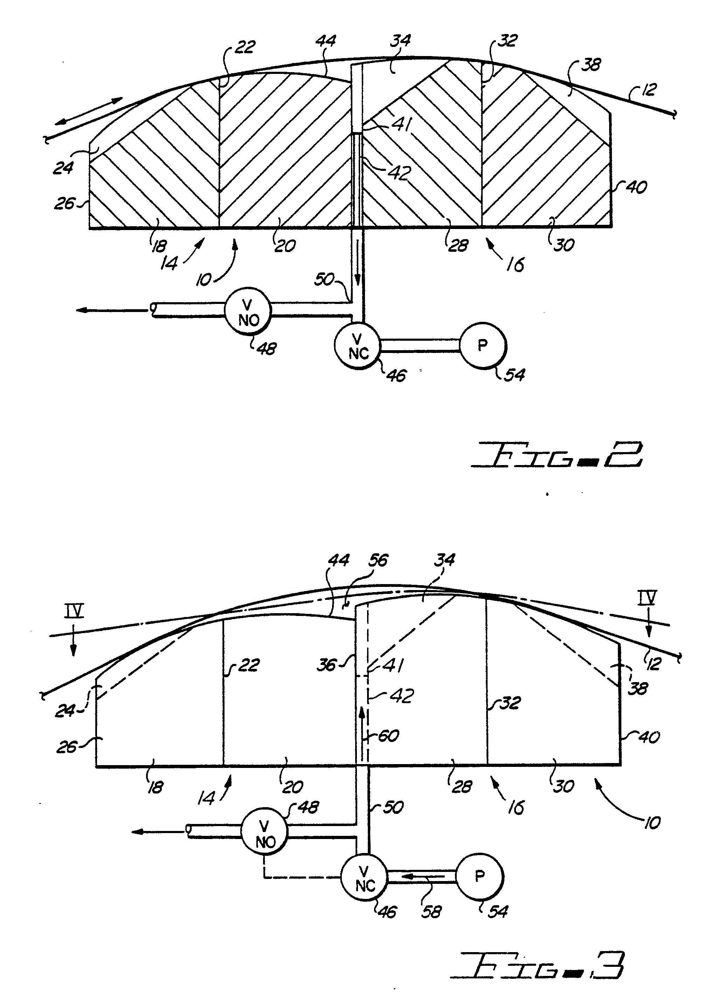

The magnetic head 10 (Fig. 2) is shaped so that the moving tape 12 flies very close to the write transducer gap line 22 and the read transducer gap line 32. The slots 24 formed in the write chip 18 assist in keeping the tape 12 close to the write transducer gap line 22 in the forward direction of tape motion, that is with a point on the tape travelling past the leading face 26 first. The slots 34 formed in the read closure 28 assist in keeping the tape 12 at a close flying height from the read transducer gap line 32 in the forward direction of tape motion. The tape normally travels in the forward direction from the supply reel to the take-up reel and the head 10 is conditioned to transducer with the tape travelling in the opposite rearward direction. In this case, the slots 38 in the read chip 30 operate to keep the tape 12 in close contact with the read transducer gap line 32. Normally, the magnetic heads are required to read data from the tape 12 only when the tape is travelling in the reverse direction from the take-up reel to the supply reel. Thus, when the magnetic tape 12 is moving over the magnetic head 10, the tape 12 is in close association with an operative face 44 of the head 10. The operative face 44 includes land areas adjacent to the slots and the transducing gap line areas as well as the areas adjacent to the transducing gap lines. With the tape 12 and the head 10 in operative transducing association, the lifter tube 42 is open to atmospheric pressure with the valve 48 open and the valve 46 closed, that is with the valves in normal position. The pump 54 may or may not be operating because the valve 46 prevents no fluid pressure from being directed to the lifter tube 42.

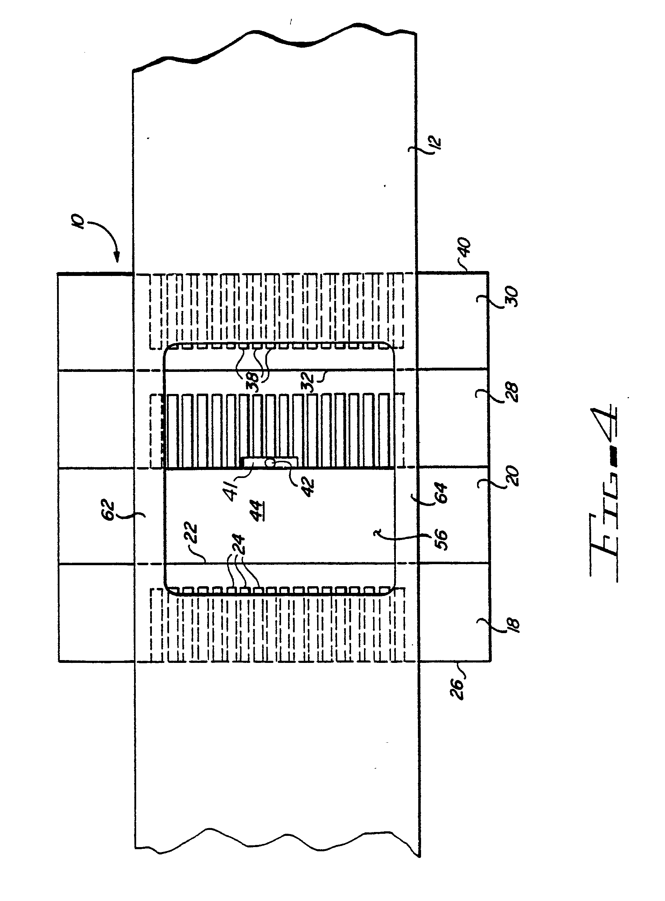

When the tape is to be stopped, the normally open valve 48 (Fig. 3) is closed to shut off the tubes 42 and 50 from the atmosphere, and the normally closed valve 46 is opened to allow the fluid pressure from pump 54 to flow in the direction of arrows 58 and 60 into the space between the operative face 44 and the tape 12. The fluid pressure is such that the tape 12 is lifted away from the contact with most of the operative face 44 of the head 10 and forms a tent-like structure 56 above the face 44. The tape 12 is lifted away from the write transducing gap line 22 and the read transducing gap line 32. The tape is in contact with the write chip 18 and the read chip 30 in the land areas adjacent to the slots 24 and 38 respectively, and with parts of the face 44 along the edges of the tape.

The fluid pressure supplied to the tent-like structure 56 is such that the tension placed upon the tape 12 between the take-up reel and supply reel pulls the tape into contact with or close to the head around the periphery of the tent-like structure 56 (Fig. 4). The tape 12 is in contact with the land areas of the head between the slots 24 across the full width of the tape 12, leaving the ends of the slots 24 opening into the tent-like structure 56 to allow some of the fluid to escape through the slots 24. Likewise, the tape is in contact with the land areas of the head between the slots 38 across the full width of the tape 12, but leaving the ends of the slots 38 opening into the tent-like structure 56 to allow some of the fluid to escape through the slots 38. The tape 12 comes in contact with or close to the head 10 along the edges of the tape in the areas 62 and 64. The tensioned tape 12 forms with the head 10 a restricted passage for fluid from the tent-like structure 56 around its periphery. The pressure of fluid from the pump 54 is selected so that the stationary tensioned tape 12 is held away from the major portion of the operative face 44 and in particular from the write transducing gap line 22 and read transducing gap line 32. Read and write operations do not take place with the tape stationary.

The tape 12 is threaded over the head 10 between supply and take-up reels, and, as long as the tape is in motion, the interface between the tape and the head is as shown in Fig. 2. The transducers of the head are activated and a read/write operation is performed. The valves 46 and 48 are open and closed, respectively, and any pressure built up in the interface between the tape and the head is exhausted through the tape lifter tube 42 into the connector tube 50 and through the valve 48 to atmosphere. This keeps the space adjacent the operative face 44 of the head at atmospheric pressure or a natural foil air bearing pressure. When the tape is stopped for whatever reason, such as when the tape drive is awaiting a further command to sense the next group of data information from the tape 12, the valve 48 is closed, the valve 46 is opened and the pump 54 is operative. The fluid pressure forms the tent-like structure 56 between the tape and the operative face 44 of the head 10, with fluid exhausting through the slots 24 and 38 and under the edge areas 62 and 64 to control the distance between the tape 12 and the operative face 44 of the head 10. The tape and head interface is then as shown in Figs. 3 and 4.

When a start command is received to start tape motion to enable transducing to occur, the valve 48 is opened and the valve 46 is closed. The tent-like structure 56 collapses quickly because fluid pressure is vented through the slots 24 and 38, under the edge areas 62 and 64 and in the direction of arrow 52 (Fig. 2) through the lifter tube 42, to return the pressure between the tape 12 and the operative face 44 of the head 10 to atmospheric pressure or a natural foil air bearing pressure.

When a stop command is received to stop tape motion, the valve 46 is opened and the valve 48 is closed. The fluid pressure provided through the lifter tube 42 quickly lifts the tape from contact with the transducers and forms the tent-like structure 56 over the transducers.

The position of the recess 41 and lifter tube 42 is approximate to the centre of the head 10. The dimensions of the recess are determined by the slots 34 and for the preferred embodiment are about 15 millimetres in the direction of tape motion and about 40 millimetres across. The tape tension is kept at about 225 g (8 ounces) in a 12.7 mm (one-half inch) tape of 0.0254 mm (0.001 inch) thickness. The air pressure, in order to form an acceptable tent-like structure, is from 13.7895 to 34.4738 kN/m² (2 to 5 pounds per square inch).

The fluid escape path, through the slots in the head, produces in effect a sort of wedge lift while the remaining contact area around the periphery of the magnetic head serves, in effect, as a hinge. Therefore, for the purposes of the transducing action, there is a hinge at the write module 14 as well as a hinge at the read module 16. The hinge concept produces, in effect, a very fast response tape lifting upon application of fluid pressure and a very fast collapse of the tent-like structure upon the removal of fluid pressure in preparation for a normal read/write operation.

Many different shapes of tubing, such as rectangular, square or circular, can be used for the lifter tube 42. A slot cut into the ceramic material of the head could form the recess and tube required to carry the fluid to the operative face of the head. A different placement of the tube, other than in the read module or at the exact centre of the head, and the provision of a number of tubes are possible within this invention, the only criterion being that a substantially symmetrical lifting pattern be established on the operative face of the magnetic head. The pressure of the fluid must be such as to create a tent-like structure with escape paths at the leading and trailing edges of the head. The head need not be limited to the shape and placement of the individual transducers as disclosed.

The valves 46 and 48 may be incorporated in a single valve controlling the connection of the tube 52 to fluid pressure or atmospheric pressure.

## Claims

1. An apparatus comprising a magnetic head (10) for sensing magnetic transitions from a flexible magnetic medium (12), comprising a plurality of transducers on an operative face of the head, and a plurality of slots (24, 38) formed in a leading and trailing portion of the operative face parallel to the direction of motion of the medium, characterized by
a recess (41) formed in a central portion of the operative face for introducing fluid between the medium and the operative face of the head;
means (46, 48, 54) for controlling the pressure of the fluid entering in said recess;
said controlling means, when deactuated, opening the recess to atmospheric pressure and, when actuated, closing the fluid path to atmospheric pressure and entering the fluid under pressure into the recess to form the medium into a tent-like structure over the operative face such that the medium is supported by the lands between said slots and by edge portions (62, 64) of the operative face parallel to the motion of the medium while the fluid is permitted to controllably escape through said slots wherein said fluid will escape through the slots when said controlling means is deactuated to stop the entry of fluid under pressure into the recess; and
means for actuating the controlling means when the medium is stationary with respect to the head.

2. A method of operating a magnetic head by controlling an interface region between a generally stationary transducing head (10) and a flexible record medium (12) disposed in a transducing relation with the head, the head comprising a plurality of transducers on an operative face of the head and a plurality of slots (24, 38) formed in a leading and trailing portion of the operative face parallel to the direction of motion of the medium, characterized by the steps of:
introducing fluid under pressure into said interface region between the head and the medium when the medium is stationary or nearly stationary with respect to the head;

controlling the flow of fluid under pressure so that said interface region is open to a source of fluid under pressure when the medium is stationary or near stationary and is open to atmospheric pressure when the medium is in motion relative to the head;

forming the medium into a tent-like structure over the operative face such that the medium is supported by the lands between said slots and by edge portions (62, 64) of the operative face parallel to the motion of the medium while the fluid is permitted to controllably escape through said slots when the interface region is open to said source of fluid under pressure; and

said fluid escaping through said slots when said interface region is open to atmospheric pressure.

## Patentansprüche

1. Vorrichtung mit einem Magnetkopf (10) zum Abtasten magnetischer Flußwechsel von einem flexiblen magnetischen Medium (12), mit einer Vielzahl von Wandlern auf einer Arbeits-Wirkfläche des Kopfes und mit einer Vielzahl von Schlitzen (24, 38) im vorderen und hinteren Bereich der Arbeits-Wirkfläche parallel zur Bewegungsrichtung des Mediums, gekennzeichnet durch

eine Aussparung (41) im zentralen Bereich der Arbeits-Wirkfläche zum Einführen von Flüssigkeit zwischen das Medium und die Arbeits-Wirkfläche des Kopfes;

Einrichtungen (46, 48, 54) zum Steuern des Drucks der in die Aussparung eintretenden Flüssigkeit;

wobei die Steuereinrichtung im inaktiven Zustand die Aussparung für atmosphärischen Druck öffnet und im aktiven Zustand den Flüssigkeitsweg für atmosphärischen Druck schließt und die Flüssigkeit unter Druck in die Aussparung einläßt, wodurch das Medium eine zeltähnliche Struktur über der Arbeits-Wirkfläche erhält, so daß es von den Bereichen zwischen den Schlitzen und von den Endbereichen (62, 64) der Arbeits-Wirkfläche parallel zur Bewegungsrichtung des Mediums unterstützt wird, während die Flüssigkeit kontrolliert durch die Schlitze entweichen kann, wobei die Flüssigkeit durch die Schlitze entweicht, wenn die Steuereinrichtung inaktiv ist, so daß keine Flüssigkeit mehr unter Druck in die Aussparung eintreten kann, und durch

Einrichtungen zum Betätigen der Steuereinrichtung, sobald das Medium im Hinblick auf den Kopf stationär ist.

2. Verfahren zum Betreiben eines Magnetkopfes durch Steuern eines Übergangsbereichs zwischen einem im wesentlichen stationären Wandlerkopf (10) und einem flexiblen Aufzeichnungsmedium (12), welches sich relativ zum Kopf bewegt, wobei der Kopf eine Vielzahl von Wandlern auf einer Arbeits-Wirkfläche des Kopfes und eine Vielzahl von Schlitzen (24, 38) im vorderen und hinteren Bereich der Arbeits-Wirkfläche parallel zur Bewegungsrichtung des Mediums aufweist, gekennzeichnet durch folgende Schritte:

Einbringen von Flüssigkeit unter Druck in den Übergangsbereich zwischen Kopf und Medium, wenn das Medium stationär bzw. beinahe stationär im Hinblick auf den Kopf ist;

Steuern des Flüssigkeitsflusses unter Druck, so daß sich der Übergangsbereich zu einer unter Druck stehenden Flüssigkeitsquelle hin öffnet, wenn das Medium stationär bzw. beinahe stationär ist und sich für atmosphärischen Druck öffnet, wenn das Medium in Bezug auf den Kopf in Bewegung ist;

Ausbildung des Mediums zu einer zeltähnlichen Struktur über der Arbeits-Wirkfläche, derart, daß das Medium von den Bereichen zwischen den Schlitzen und von den Endbereichen (62, 64) der Arbeits-Wirkfläche parallel zur Bewegungsrichtung des Mediums unterstützt wird, während die Flüssigkeit kontrolliert durch die Schlitze entweichen kann, wenn sich der Übergangsbereich zur unter Druck stehenden Flüssigkeitsquelle hin geöffnet hat; und durch

Entweichen der Flüssigkeit durch die Schlitze, wenn der Übergangsbereich zum atmosphärischen Druck hin offen ist.

## Revendications

1. Appareil comprenant une tête magnétique (10) pour détecter des transitions magnétiques à partir d'un milieu magnétique (12) flexible, comportant une pluralité de transducteurs sur une face opérationnelle de la tête, et une pluralité d'encoches (24, 38) formées dans une partie amont et aval de la face opérationnelle parallèlement à la direction du mouvement du milieu, caractérisé par un évidement (41) formé dans une partie centrale de la face opérationnelle pour introduire un fluide entre le milieu magnétique et la face opérationnelle de la tête; des moyens (46, 48, 54) pour commander la pression du fluide pénétrant dans ledit évidement; lesdits moyens de commande ouvrant, lorsqu'ils ne sont pas actionnés, l'évidement à la pression atmosphérique, et fermant, quand ils sont actionnés, le passage du fluide vers la pression atmosphérique et faisant pénétrer le fluide sous pression dans l'évidement pour donner au milieu une structure semblable à celle d'une tente au-dessus de la face opérationnelle, de façon telle que le milieu soit supporté par les parties solides entre lesdites encoches et par les bords (62, 64) de la face opérationnelle parallèlement au mouvement du milieu, tandis que le fluide peut s'échapper de façon contrôlée à travers lesdites encoches, ledit fluide s'échappant à travers les encoches quand lesdits moyens de commande ne sont pas actionnés pour arrêter l'entrée du fluide sous pression dans l'évidement; et des moyens pour actionner les moyens de commande quand le milieu est immobile par rapport à la tête.

2. Procédé en mise en oeuvre d'une tête magnétique en contrôlant une région d'interface entre une tête de transducteur (10) pratiquement stationnaire et un milieu (12) flexible d'enregistrement disposé en relation de transduction avec la tête, la tête comprenant une pluralité de transducteurs sur une face opérationnelle, et une pluralité d'encoches (24, 38) formées dans une partie amont et aval de la face opérationnelle parallèlement à la direction du mouvement du milieu, caractérisé par les étapes suivantes: introduction d'un fluide sous pression dans ladite région d'interface entre la tête et le milieu quand le milieu est stationnaire ou presque stationnaire par rapport à la tête; commande du débit du fluide sous pression de telle sorte que ladite région d'interface soit ouverte à une source de fluide sous pression quand le milieu est stationnaire ou presque stationnaire, et ouverte à la pression atmosphérique quand le milieu est en mouvement par rapport à la tête; formation du milieu en une structure semblable à celle d'une tente au-dessus de la face opérationnelle, de façon telle que le milieu soit supporté par les parties solides entre lesdites encoches et par les bords (62, 64) de la face opérationnelle parallèlement au mouvement du milieu, tandis que le fluide peut s'échapper de façon contrôlée à travers lesdites encoches quand la région de l'interface est ouverte à ladite source de fluide sous pression, ledit fluide s'échappant à travers lesdites encoches quand ladite région d'interface est ouverts à la pression atmosphérique.

$$\boxed{F_{IG}-1}$$

FIG-2

FIG-3

FIG.4